# FASCICULE DE BREVET EUROPEEN

(11) **EP 2 326 220 B1**
(45) Date de publication et mention de la délivrance du brevet: **29.08.2012**
(21) Numéro de dépôt: 09784431.0
(22) Date de dépôt: 24.06.2009
(51) Int. Cl.: A47J 19/02

(54) **APPAREIL ELECTROMENAGER DE PREPARATION DE JUS**
ELEKTRISCHES HAUSHALTSGERÄT ZUR ZUBEREITUNG VON SAFT
ELECTRICAL HOUSEHOLD APPLIANCE FOR PREPARING JUICE

(30) Priorité: 24.06.2008 FR 0854206
(43) Date de publication de la demande: 01.06.2011
(73) Titulaire: SEB S.A., 69130 Ecully (FR)
(72) Inventeur: PERRIER, Matthieu, F-65310 Laloubere (FR)
(74) Mandataire: Blanchard, Eugène Gilles
(86) Numéro de dépôt international: PCT/FR2009/051209
(87) Numéro de publication internationale: WO 2010/007290

(56) Documents cités:
- DE-B- 1 185 343
- US-A- 1 443 535
- US-A- 4 385 553

## Description

La présente invention concerne le domaine de la préparation de jus frais à partir d'aliments tels que des fruits et/ou des légumes.

Plus particulièrement, l'invention concerne un appareil électroménager dédié spécifiquement à la préparation de tels jus et qui permette un traitement et une conservation des propriétés gustatives et organoleptiques des aliments et des jus produits améliorés.

Dans le domaine susvisé, on connaît déjà un grand nombre d'appareils électroménagers dédiés, spécifiquement ou non, à la préparation de jus de fruits ou de légumes.

Les plus simples d'entre eux consistent en des presse-agrumes motorisés dont l'ogive de pressage est solidaire de l'axe d'un moteur électrique dont la rotation est actionnée lorsque l'utilisateur appui manuellement l'aliment à presser sur l'ogive de pressage. Ces presse-agrumes présentent l'inconvénient de nécessiter l'action manuelle de l'utilisateur sur l'appareil, directement au niveau de l'ogive de pressage, ce qui procure des risques de contact entre l'utilisateur et la partie mobile de l'appareil. De plus, leur emploi s'avère difficile pour l'utilisateur dans la mesure où il nécessite une pression continue de sa part sur l'ogive de pressage par l'intermédiaire de l'aliment à presser.

On connaît également d'autres appareils électroménagers de préparation de jus tels que des centrifugeuses, qui ne nécessitent pas d'action manuelle de l'utilisateur sur les aliments à presser pour réaliser l'opération d'extraction des jus. Ces centrifugeuses fonctionnent, comme leur nom l'indique, par centrifugation des aliments dans une enceinte, le jus étant extrait par la force centrifuge appliquée aux aliments. Ces appareils sont extrêmement performants dans leur capacité à extraire une quantité de jus très rapidement. Cependant, la qualité des jus produits est elle très réduite du fait du contact très important des jus avec l'air au sein de l'enceinte de centrifugation, qui favorise une oxydation très rapide des jus et donc une perte importante des qualités gustatives et organoleptiques de ceux-ci.

On connaît enfin un dernier type d'appareils électroménagers de production de jus, comportant une vis de pressage et permettant une extraction séparée des jus et des résidus pressés des aliments. Des exemples particuliers de tels appareils sont notamment décrits dans les documents US 5,906,154 et WO 2007/148872, ainsi que dans le document DE 1 185 343.

Ces derniers appareils sont satisfaisants et performants pour ce qui est du pressage des aliments et de la qualité des jus obtenus. Toutefois, il est impossible d'introduire des aliments de taille importante entiers et il est nécessaire de découper les aliments en morceaux préalablement à leur pressage ce qui est fastidieux pour l'utilisateur.

La présente invention a pour objectif de proposer un appareil électroménager qui pallie aux inconvénients des appareils connus à ce jour.

A cet effet, la présente invention propose un appareil électroménager de préparation de jus par pressage d'aliments, notamment de végétaux tels que des fruits ou des légumes, comportant :
- un boîtier renfermant un moteur électrique d'entraînement,
- une enceinte de travail adaptée pour être installée sur le boîtier et comportant une ouverture d'admission d'aliments à l'intérieur de l'enceinte de travail et, une première sortie d'évacuation pour le jus et une deuxième sortie d'évacuation pour les résidus de pressage,
- une vis de pressage montée à l'intérieur de l'enceinte de travail et accouplée mécaniquement à un arbre d'entraînement du moteur électrique, et
- un moyen de filtration monté coaxialement à la vis de pressage à l'intérieur de l'enceinte de travail, prévu pour séparer le jus des résidus de pressage, et
- un organe de découpe des aliments disposé entre l'ouverture d'admission et la vis de pressage.

Conformément à l'invention, cet appareil est caractérisé en ce que l'ouverture d'admission est formée dans un conduit de largeur superieure au plus grand rayon de la vis de pressage et en ce que l'organe de découpe des aliments comporte au moins un bord de coupe délimitant un passage d'aliment découpé présentant au moins une dimension inférieure au plus grand rayon de la vis de pressage.

Ainsi, l'appareil de l'invention permet le traitement d'aliments entiers sans que l'utilisateur n'ait à les découper préalablement à leur introduction dans l'appareil par l'ouverture d'admission.

Des aliments de taille supérieure au rayon de la vis de pressage peuvent être introduits dans l'ouverture d'admission, laquelle est formée avantageusement dans un conduit prolongeant l'enceinte de travail, telle que par exemple une goulotte. Cependant, le conduit d'introduction comportant l'ouverture d'admission n'est pas nécessairement vertical mais peut être coudé, avec une ouverture d'admission latérale.

L'organe de découpe permet de sectionner les aliments, tels que par exemple des pommes entières, en morceaux susceptibles d'être entraînés par la vis de pressage contre le moyen de filtration.

Un appareil électroménager de préparation de jus par pressage d'aliments, notamment de fruits et légumes, présentant une taille compacte peut ainsi être obtenu. L'utilisation de cet accessoire est aisée grâce à la taille importante de l'ouverture d'admission.

Conformément à une première caractéristique préférée de l'appareil de l'invention, l'enceinte de travail comporte un couvercle dans lequel est formée l'ouverture d'admission.

Dans un premier mode de réalisation préféré de l'appareil de l'invention, l'organe de découpe est monté à l'intérieur de l'enceinte de travail et est accouplé en rotation à l'arbre d'entraînement du moteur électrique et/ou à la vis de pressage.

Dans ce mode de réalisation, l'appareil de l'invention comporte un bord de coupe concave balayant l'espace de l'enceinte de travail disposé sous une partie inférieure de l'ouverture d'admission.

Par ailleurs, toujours dans ce mode de réalisation, l'appareil de l'invention peut également comporter un organe de blocage en rotation des aliments disposé entre l'ouverture d'admission et la vis de pressage. Cet organe de blocage permet de maintenir les aliments à presser au niveau de l'ouverture d'admission pour que ceux-ci soient plus facilement découpés par l'organe de découpe.

Toujours dans ce mode de réalisation préféré, l'organe de découpe de l'appareil de l'invention comporte de préférence une lame hélicoïdale ou une lame concave. De préférence encore, cette lame hélicoïdale ou cette lame concave est solidaire de la vis de pressage et est formée dans le prolongement d'un filet de ladite vis de pressage. On comprend ici que c'est le bord de coupe de l'organe de découpe qui s'étend dans le prolongement, de préférence sans discontinuités, d'un filet de la vis de pressage de l'appareil.

Toujours selon l'invention, l'appareil de pressage proposé comporte également dans ce premier mode de réalisation préféré un moyen de guidage des aliments introduits par ladite ouverture d'admission vers l'organe de découpe et la vis de pressage.

Ce moyen de guidage peut par exemple comporter une couronne présentant une surface interne guidante sensiblement conique et qui délimite un passage pour les aliments vers l'organe de découpe et la vis de pressage.

De préférence, le moyen de guidage comporte des moyens d'appui sur au moins une paroi latérale de l'enceinte de travail afin de faciliter son calage à l'intérieur de l'enceinte de travail de l'appareil.

Dans une configuration particulière de l'appareil de l'invention, la couronne formant le moyen de guidage est solidaire de la vis de pressage.

Dans une forme de réalisation avantageuse de l'appareil de l'invention, la lame hélicoïdale ou la lame concave est agencée à l'intérieur de la surface interne guidante de la couronne formant moyen de guidage.

Dans un second mode de réalisation préféré de l'invention, l'organe de découpe s'étend au travers de l'ouverture d'admission de manière à sectionner les aliments en morceaux présentant une largeur inférieure au rayon de la vis de pressage et est fixé sur au moins un rebord ou une paroi de ladite ouverture d'admission.

Dans ce mode de réalisation, l'organe de découpe peut être agencé à l'intérieur de la goulotte et comporter au moins une lame et/ou une saillie coupante. De plus, on comprend ici que dans ce mode de réalisation, l'organe de découpe forme également un moyen de blocage des aliments à découper au niveau de l'ouverture d'admission.

De façon complémentaire et avantageuse, l'appareil de l'invention peut également comporter un poussoir comportant un corps de poussée prévu pour pousser les aliments à presser dans l'ouverture d'admission contre l'organe de découpe et en direction de la vis de pressage.

Avantageusement, le corps de poussée dudit poussoir est adapté pour être inséré dans la goulotte formant ladite ouverture d'admission et présente une longueur au moins égale à la hauteur de ladite goulotte.

Enfin, lorsque l'organe de découpe est localisé dans la goulotte de l'appareil de l'invention notamment, le corps de poussée du poussoir peut comporter au moins une rainure longitudinale adaptée pour permettre un enfilement du corps de poussée sur l'organe de découpe lors de l'insertion du poussoir dans ladite goulotte.

Diverses autres caractéristiques ressortent de la description faite ci-dessous en référence aux dessins annexés qui montrent, à titre d'exemples non limitatifs, des formes de réalisation de l'objet de l'invention.

Sur les figures :
- la figure 1 représente un appareil électroménager selon la présente invention dans un premier mode de réalisation préféré comportant un organe de découpe associé à la vis de pressage de l'appareil ;
- la figure 1A est une vue schématique de dessus de l'appareil représenté sur la figure 1 ;
- la figure 2 représente en détail et en perspective une variante de réalisation préférée de la vis de pressage de l'appareil de l'invention dans laquelle une lame de découpe des aliments et une couronne de guidage sont solidaires de l'extrémité haute de la vis de pressage
- la figure 3 représente en détail une variante de réalisation de l'appareil de la figure 1, dans laquelle le couvercle de l'enceinte de travail 3 comporte une goulotte d'introduction décalée par rapport à l'axe de la vis de pressage ;
- la figure 4 est une vue en coupe et en perpective d'une deuxième variante de réalisation de l'appareil illustré sur la figure 1, dans laquelle le couvercle de l'enceinte de travail 3 comporte une goulotte d'introduction décalée par rapport à l'axe de la vis de pressage ;
- la figure 5 est une vue en perspective de la vis de pressage de l'appareil illustré sur la figure 4 ;
- la figure 6 représente une troisième variante de réalisation de l'appareil de l'invention tel que proposé à la figure 1, dans laquelle l'enceinte de travail 3 est formée d'un bol haut ;
- les figures 7 à 9 représentent différentes variantes de réalisation de l'appareil de l'invention dans lesquelles l'organe de découpe dudit appareil est formé d'au moins une lame disposée au niveau de la goulotte d'introduction des aliments.

L'invention propose un nouvel appareil électroménager pour la préparation de jus à partir d'aliments tels que, notamment, des fruits et/ou des légumes.

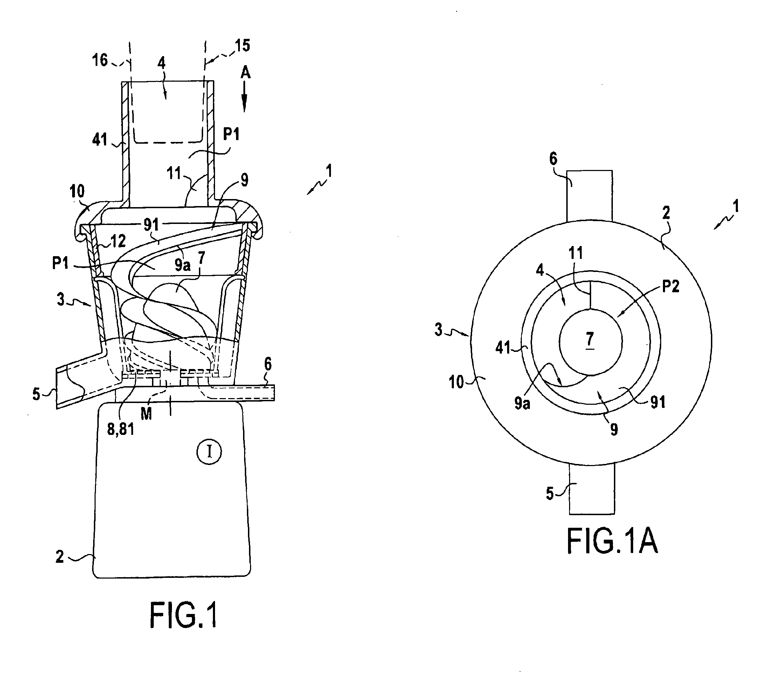

Les figures 1 à 6 représentent différentes variantes d'un premier mode de réalisation préféré de l'appareil de l'invention.

En référence tout d'abord à la figure 1, l'appareil électroménager 1 de la présente invention comporte un boîtier 2 sur lequel peut être assemblé une enceinte de travail 3.

Le boîtier 2 renferme, de façon connue en soi, un moteur électrique d'entraînement ainsi qu'une électronique de commande et pilotage de ce moteur. L'axe d'entrainement M du moteur s'étend partiellement en saillie à la surface d'une platine de fixation formé sur le boîtier pour recevoir et fixer l'enceinte de travail 3.

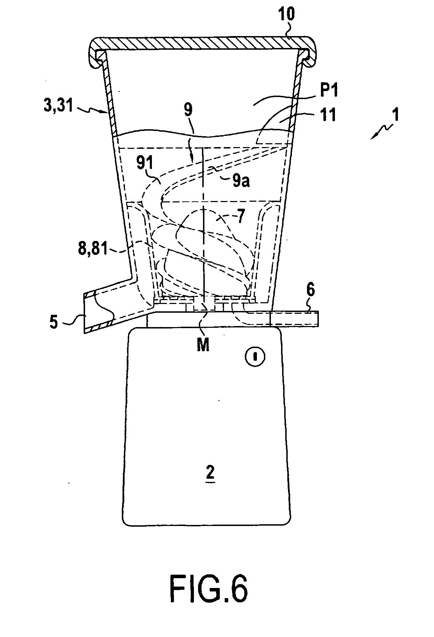

L'enceinte de travail 3 comprend un récipient 31 ouvert en sa partie supérieure tel qu'un bol comme représenté sur les figures 1 à 5 ou, comme représenté sur la figure 6, un bol haut, c'est-à-dire dont la hauteur est supérieure au diamètre, parfois appelé blender, ainsi qu'un couvercle 10 apte à être fixé sur un bord supérieur dudit récipient. Cette enceinte 3 comporte une ouverture d'admission d'aliments 4, ainsi qu'une première sortie d'évacuation 5 pour le jus et une deuxième sortie d'évacuation 6 pour les résidus de pressage des aliments traités.

Dans le cadre de l'invention, l'ouverture d'admission 4 est réalisée dans un conduit de largeur supérieure au plus grand rayon de la vis de pressage 7. Ainsi, dans les exemples de réalisation des figures 1 à 5, l'ouverture d'admission 4 est constituée par une goulotte d'admission 41 agencée sur le couvercle 10, dont la section est choisie pour permettre le passage d'aliments tels que des pommes ou des oranges d'un diamètre allant par exemple jusqu'à 75 mm.

Dans l'exemple de la figure 6, le couvercle 10 est dépourvu de goulotte et l'ouverture d'admission 4 est formée tout simplement par l'ouverture supérieure du récipient 31 de l'enceinte de travail 3.

A titre de variante, dans l'exemple de la figure 6, le couvercle 10 pourrait lui aussi comporter une goulotte, associée le cas échéant à un poussoir adapté. De même, sur les exemples des figures 1 à 5, le couvercle 10 pourrait à l'inverse être dépourvu de goulotte verticale.

A l'intérieur de l'enceinte de travail 3 sont installés, comme représenté sur les figures 1, 3, 4 et 6, les éléments de pressage des aliments qui comportent en premier lieu une vis de pressage 7 accouplée en rotation au fond de l'enceinte de travail 3 avec l'arbre d'entraînement M du moteur électrique renfermé dans le boîtier 2 de l'appareil.

Cet accouplement peut être réalisé notamment par l'intermédiaire d'une pièce rotative (non représentée) fixée de façon étanche au fond de l'enceinte de travail 3 et présentant une partie femelle d'accouplement avec l'arbre M d'entraînement du moteur électrique sur la face externe du fond de l'enceinte et une partie mâle d'accouplement avec la vis de pressage 7 sur la face interne de l'enceinte 3.

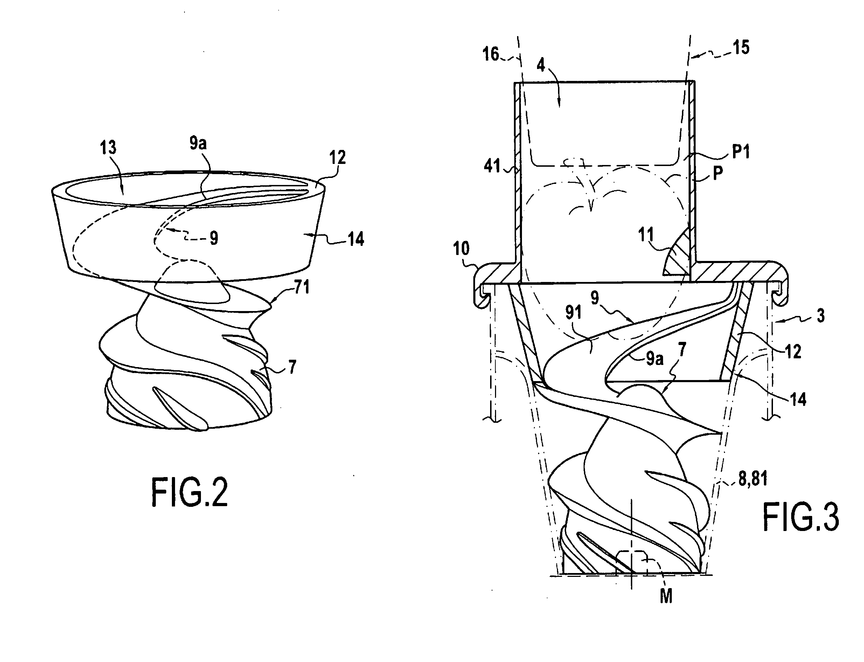

Comme cela est représenté sur les figures 2, 3 et 5, la vis de pressage 7 peut présenter avantageusement une forme sensiblement ogivale et elle comporte sur sa surface externe des filets 71 conformés pour entraîner et écraser en rotation les aliments à presser.

Pour réaliser le pressage d'aliments en collaboration avec la vis de pressage 7, l'appareil de l'invention comporte également un moyen de filtration 8, formé par exemple d'un tambour 81 monté de façon coaxiale à la vis de pressage 7 à l'intérieur de l'enceinte 3, afin de réaliser la séparation des jus et des résidus « secs » des aliments pressés. Ce tambour 81 est avantageusement conçu tel que son diamètre interne soit sensiblement égal au diamètre maximal externe de la vis de pressage 7, pris au niveau du bord de fuite de ses filets 71.

Ainsi, on obtient un effet de pressage performant et continu des aliments à presser entre la vis de pressage 7 et le tambour de filtration 81, ce qui permet une bonne séparation des jus et des résidus secs. Lors du pressage des aliments entre la vis de pressage 7 et le tambour 81, les jus traversent les parois latérales du tambour 81 par des orifices prévus à cet effet pour s'écouler ensuite entre le tambour et les parois de l'enceinte 3 vers la première sortie d'évacuation 5.

Dans le même temps, les résidus secs des aliments pressés sont quant à eux évacués par le fond de l'enceinte de travail 3 par un canal d'évacuation prévu à cet effet (non représenté sur les figures) et qui communique directement avec la seconde sortie d'évacuation 6 de l'enceinte de travail 3 tout en étant indépendant du circuit d'évacuation des jus.

L'appareil 1 de la présente invention est tout spécialement prévu pour permettre le pressage d'aliments entiers sans qu'il soit nécessaire de préparer ces aliments, et notamment de les découper préalablement à leur pressage. A cet effet, l'ouverture d'admission 4 de l'enceinte de travail 3 est conformée pour permettre l'introduction des aliments entiers dans l'enceinte. Toutefois, le pressage d'aliments entiers peut s'avérer délicat lorsque ces aliments présentent une taille supérieure au rayon de la vis de pressage 7.

C'est pourquoi conformément à la présente invention, l'appareil électroménager 1 comporte avantageusement une ouverture d'admission 4 dont la plus petite dimension est supérieure au rayon de la vis de pressage 7. L'ouverture d'admission 4 est formée de préférence dans un conduit vertical surmontant l'enceinte de travail 3, par exemple une goulotte 41 comme représenté sur les figures 1, 3 et 4 et présentant une largeur supérieure au plus grand rayon de la vis de pressage 7. L'appareil de l'invention comporte également un organe de découpe 9 des aliments, disposé entre l'ouverture d'admission 4 et la vis de pressage 7, cet organe de découpe 9 des aliments comporte au moins un bord de coupe 9a délimitant un passage d'aliment découpé P2 présentant au moins une dimension inférieure au plus grand rayon de la vis de pressage 7.

L'organe de découpe 9 est prévu pour sectionner l'aliment introduit par l'ouverture d'admission 4 en plusieurs morceaux présentant une section inférieure au passage d'introduction P1 au dessus de la vis de pressage 7.

Dans l'exemple de réalisation des figures 1 à 3 et 6, cet organe de découpe 9 est constitué de façon avantageuse par une lame hélicoïdale 91 formée dans le prolongement supérieur d'un filet 71 de la vis de pressage 7. Une telle lame hélicoïdale 91 comporte un bord de coupe 9a concave balayant l'espace de l'enceinte de travail 3 disposé sous une partie inférieure de l'ouverture d'admission 4, au dessus de la vis de pressage 7. Ceci procure ainsi l'avantage de réaliser la découpe des aliments à presser dès leur introduction dans l'enceinte de travail 3 par l'ouverture d'admission 4 et avant que ces aliments n'entrent en contact de la vis elle-même, la découpe étant réalisée par un effet de sabrage des aliments par la lame 91 entrainée en rotation dans l'enceinte 3 conjointement à la vis de pressage 7, au contact du bord de coupe 9a de la lame hélicoïdale 91.

Dans la variante de réalisation illustrée sur les figures 2 et 3, la goulotte d'admission 41 est décentrée par rapport à la vis de pressage 7.

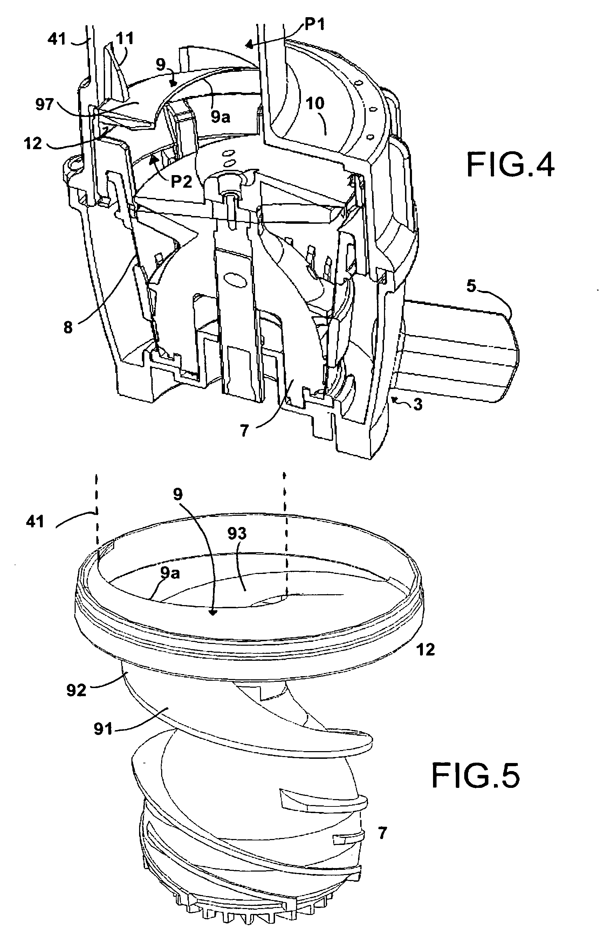

Dans la variante de réalisation illustrée sur les figures 4 et 5, l'organe de découpe 9 est constitué de façon avantageuse par une lame concave 97 formée dans le prolongement supérieur d'un filet 71 de la vis de pressage 7. Une telle lame concave 97 comporte un bord de coupe 9a concave balayant l'espace de l'enceinte de travail 3 disposé sous une partie inférieure de l'ouverture d'admission 4, au dessus de la vis de pressage 7. La goulotte d'admission 41 est décentrée par rapport à la vis de pressage 7. Le bord de coupe 9a présente avantageusement un profil correspondant à la section de la goulotte d'admission 41. La largeur de la goulotte d'admission 41 est supérieure au plus grand rayon de la vis de pressage 7. Une portion de filet 72 s'étend en dessous du bord de coupe 9a de la lame concave 97. Une portion de filet supérieure 73 prolonge la portion de filet 72 jusqu'au bord de coupe 9a. La distance entre la portion de filet 72 et le bord de coupe 9a est inférieure au plus grand rayon de la vis de pressage 7. Ainsi un aliment tel qu'une pomme entière introduite dans la goulotte d'admission 41 peut prendre appui sur la portion de filet supérieure 73. Le bord de coupe 9a délimite un passage d'aliment découpé P2 présentant une dimension inférieure au plus grand rayon de la vis de pressage 7. La partie inférieure de l'aliment est sectionnée par le bord de coupe 9a lorsque l'organe de coupe 9 est entraîné en rotation. Le morceau ainsi découpé est entraîné par la rotation de la vis de pressage 7 contre le moyen de filtration 8 pour extraire le jus.

Pour faciliter la découpe des aliments, l'appareil 1 de l'invention comporte également de façon avantageuse dans le mode de réalisation présenté sur les figures 1, 1A, 3, 4 et 6 un élément de blocage 11 s'étendant en saillie à l'intérieur de l'ouverture d'admission. Cet élément de blocage 11, par exemple formé d'une dent saillante sur la face interne de la goulotte d'admission 41 de l'appareil comme représenté sur les figures 1, 3 et 4, tend à réduire légèrement la section interne de l'ouverture d'admission 4, ce qui freine et parfois bloque les aliments introduits dans ladite ouverture d'admission 4 lorsque ceux-ci présentent une taille importante.

Les aliments ainsi bloqués peuvent être plus facilement découpés par la lame hélicoïdale 91 ou la lame concave 97 et, en utilisant par exemple l'action d'un poussoir 15 fourni avec l'appareil 1 et dont le corps de poussée 16 est adapté pour pénétrer dans la goulotte 41, il est possible de faire avancer les aliments introduits dans ladite goulotte 41 au fur et à mesure de leur découpe par la lame hélicoïdale 91 ou la lame concave 97 pour qu'ils soient ensuite entrainés en morceaux par la vis de pressage 7 et pressés entre cette vis de pressage 7 et le tambour 81.

En complément de l'élément de blocage 11, l'appareil de pressage d'aliments 1 de la présente invention comporte également, dans le mode de réalisation des figures 1 à 6, un moyen de guidage des aliments vers la vis de pressage 7 constitué par une couronne 12 disposée coaxialement à la vis de pressage 7 et la lame hélicoïdale 91 ou la lame concave 97 entre l'ouverture d'admission 4 et le tambour de filtration 81 à l'intérieur de l'enceinte de travail 3. Cette couronne de guidage 12 comporte une surface interne guidante 13 sensiblement conique et inclinée vers la tête de la vis de pressage 7 et qui permet d'orienter les aliments introduits par l'ouverture d'admission 4 vers le bord de coupe 9a de la lame hélicoïdale 91 ou de la lame concave 97 dans un premier temps puis la vis de pressage 7. La surface interne 13 de la couronne 12 délimite un passage interne pour les aliments vers l'organe de découpe 9 formé par la lame hélicoïdale 91 ou la lame concave 97 et la vis de pressage 7.

De plus, la couronne 12 comporte des moyens d'appui 14 sur au moins une paroi latérale de l'enceinte de travail 3 afin de garantir un positionnement stable de la couronne 12 à l'intérieur de l'enceinte de travail 3. Lesdits moyens d'appui peuvent de façon avantageuse être formés par la paroi externe de la couronne 12 conformée, comme représenté sur les figures 1, 4 et 6, pour épouser les parois latérales internes de l'enceinte 3 et s'appuyer dessus, ou bien, en variante par un rebord ou bourrelet adapté pour venir en appui et/ou chevauchement du rebord supérieur de l'enceinte 3.

Comme représenté en particulier sur les figures 2 à 5, la couronne 12, la lame hélicoïdale 91 ou la lame concave 97, et la vis de pressage 7 peuvent, dans une variante de réalisation être toutes trois solidaires entre elles. Dans ce cas, ces trois éléments peuvent être réalisés d'un seul tenant, par exemple par moulage de matière plastique de qualité alimentaire.

Dans une autre variante de réalisation, la couronne de guidage 12 peut également être formée de matière sur la face interne du couvercle 10 de l'enceinte 3, la lame hélicoïdale 91 ou la lame concave 97 s'étendant alors dans le prolongement d'un filet 71, 72 de la vis de pressage 7 comme indiqué précédemment et glissant sur la surface guidante 13 de la couronne pour couper les aliments introduits par l'ouverture d'admission 4.

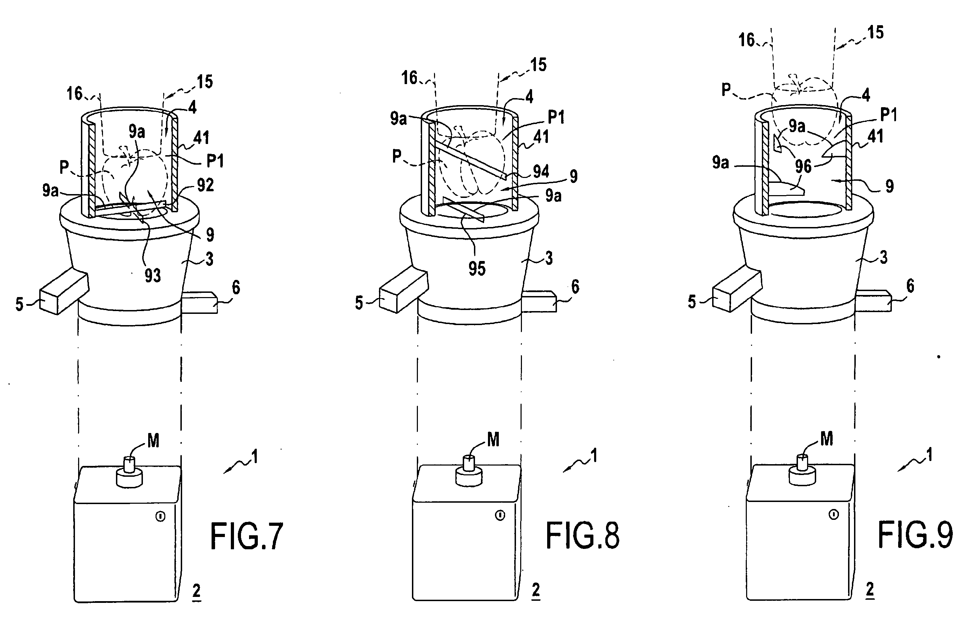

Les figures 7 à 9 présentent trois variantes d'un second mode de réalisation de l'appareil électroménager de pressage 1 de la présente invention, dans lequel l'organe de découpe 9 n'est plus solidaire en rotation de la vis de pressage 7 comme la lame hélicoïdale 91 ou la lame concave 97 dans le mode de réalisation des figures 1 à 6, mais est formé d'au moins une lame 92, 93 ; 94, 95 ; 96 fixe s'étendant transversalement dans l'ouverture d'admission 4 de l'enceinte de travail, et plus particulièrement en travers ou en saillie d'une goulotte d'admission 41 formant ladite ouverture d'admission dans le couvercle 10 de l'enceinte de travail.

Plus particulièrement, l'appareil de la figure 7 comporte une lame 92 traversant la partie inférieure de la goulotte d'admission 41. De préférence la lame 92 s'étend diamétralement dans la goulotte d'admission 41. Avantageusement l'appareil de la figure 7 peut comporter une autre lame 93 traversant la goulotte d'admission 41. Tel que représenté sur la figure 7 la lame 93 est par exemple agencée au même niveau que la lame 92 mais avec une orientation angulaire différente. Ainsi l'organe de coupe 9 définit quatre passages d'aliment découpé présentant deux dimensions inférieures au plus grand rayon de la vis de pressage 7.

Plus particulièrement, l'appareil de la figure 8 comporte une lame 94 inclinée traversant la goulotte d'admission 41, de préférence diamétralement. Ainsi l'organe de coupe 9 définit deux passages d'aliment découpé présentant au moins une dimension inférieure au plus grand rayon de la vis de pressage 7. Avantageusement l'appareil de la figure 8 comporte une autre lame 95 traversant la goulotte d'admission 41 à distance de la lame 94, de préférence diamétralement. Ainsi l'organe de coupe 9 définit également quatre passages d'aliment découpé présentant deux dimensions inférieures au plus grand rayon de la vis de pressage 7.

Plus particulièrement, l'appareil de la figure 9 comporte au moins trois lames 96 agencées en saillie dans la goulotte d'admission 41. Si désiré les lames 96 peuvent être disposées à différentes hauteurs dans la goulotte d'admission. De préférence, l'écart angulaire entre deux lames 96 adjacentes est inférieur à 180°. Ainsi l'organe de coupe 9 définit au moins trois passages d'aliment découpé présentant deux dimensions inférieures au plus grand rayon de la vis de pressage 7.

Ainsi l'organe de découpe 9 des aliments formé par au moins une des lames 92, 93 ; 94, 95 ; 96 comporte au moins un bord de coupe 9a délimitant un passage d'aliment découpé présentant au moins une dimension inférieure au plus grand rayon de la vis de pressage 7.

De préférence l'organe de découpe 9 des aliments est formé par au moins deux lames 92, 93 ; 94, 95 ; 96 comportant au moins un bord de coupe 9a délimitant au moins trois passages d'aliment découpé présentant deux dimensions inférieures au plus grand rayon de la vis de pressage 7.

Dans ces variantes de réalisation, la structure de pressage de l'appareil 1 reste identique à celle présentée dans le mode de réalisation des figures 1 à 6 et comporte essentiellement une vis de pressage 7 coaxiale à un tambour de filtration, la vis de pressage 7 étant accouplée par tout moyen approprié à l'axe d'entraînement M du moteur électrique renfermé dans le boîtier 2 de l'appareil. Ledit appareil comporte en outre de façon préférée un poussoir 15 présentant un corps de poussée 16 adapté pour être inséré dans la goulotte 41 et présentant une longueur au moins égale à la hauteur de ladite goulotte 41 pour forcer les aliments contre le bord de coupe 9a de la ou des lames fixes 92, 93 ; 94, 95 ; 96 s'étendant au travers de l'ouverture d'admission 4 définie par la goulotte 41 ou en saillie dans ladite ouverture d'admission 4.

Il convient de noter que le corps de poussée 16 du poussoir 15 peut alors comporter de façon avantageuse au moins une rainure longitudinale, non représentée sur les figures 7 à 9, adaptée pour permettre un enfilement du corps de poussée 16 sur l'organe de découpe 9 lors de l'insertion du poussoir 15 dans la goulotte 41 et ainsi une découpe complète des aliments.

A titre de variante, la ou les lames fixes 92, 93 ; 94, 95 ; 96 peuvent être agencées dans l'ouverture d'admission 4 du récipient de travail 31 illustré sur les figures 1, 3 ou 4, en remplacement ou en complément de la lame hélicoïdale 91. Dans ce cas, la ou les lames fixes 92, 93 ; 94, 95 ; 96 forment également des moyens de blocage des aliments à presser dans l'ouverture d'admission pour en faciliter la découpe.

Quel que soit le mode de réalisation particulier de l'appareil de pressage 1 décrit ci-avant, l'utilisation de cet appareil s'avère similaire et extrêmement simple pour l'utilisateur. Si celui-ci souhaite, comme présenté schématiquement sur les figures 3 et 7 à 9, réaliser le pressage de pommes P, il lui suffit de mettre en marche dans un premier temps l'appareil, en actionnant par exemple un interrupteur I de commande du moteur électrique de l'appareil. Puis, l'utilisateur insère les pommes P entières dans la goulotte 41 et les pousse vers l'intérieur de l'enceinte de travail 3 à l'aide d'un poussoir 15.

Sous l'action du poussoir 15, les pommes P sont poussées contre l'organe de découpe 9 de l'appareil et sont découpées en au moins deux morceaux, qui tombent ensuite dans l'enceinte 3 et sont entraînés par les filets 71 de la vis de pressage qui écrase et presse ces morceaux contre le tambour de filtration 81. Par ce pressage le jus des pommes traverse les pores du tambour 81 et s'écoule vers la première sortie 5 de l'enceinte, où l'utilisateur peut les récupérer dans un verre puis consommer son jus frais.

Dans le même temps, au fur et à mesure du pressage, les résidus secs de pommes pressées sont évacués par le fond de l'enceinte 3 et la seconde sortie 6, au niveau de laquelle ces résidus peuvent être récupérés dans un bac ou tout autre contenant pour ensuite être valorisés ou jetés.

Dans la variante illustrée sur la figure 6, l'utilisateur introduit les aliments à presser dans le récipient 31 après avoir retiré le couvercle 10, puis ferme le couvercle 10 et met en marche l'appareil électroménager 1.

L'appareil électroménager de pressage de la présente invention procure ainsi la faculté et l'avantage pour les utilisateurs de permettre un pressage efficace et en continu d'aliments, notamment de fruits et légumes, entiers sans avoir à préparer ni découper ces aliments préalablement au pressage ; de plus, le mode de pressage par vis procuré par l'appareil de l'invention et le traitement d'aliments entiers réduisent considérablement les effets d'oxydation par l'air des jus produits, dont les qualités gustatives et organoleptiques sont ainsi préservées.

L'invention n'est pas limitée aux exemples décrits et représentés car diverses modifications peuvent y être apportées sans sortir de son cadre.

## Revendications

1. Appareil électroménager (1) de préparation de jus par pressage d'aliments, notamment de végétaux tels que des fruits ou des légumes, comportant :
- un boîtier (2) renfermant un moteur électrique d'entraînement,
- une enceinte de travail (3) adaptée pour être installée sur le boîtier et comportant une ouverture d'admission (4) d'aliments à l'intérieur de l'enceinte de travail (3), une première sortie d'évacuation (5) pour le jus et une deuxième sortie d'évacuation (6) pour les résidus de pressage,
- une vis de pressage (7) montée à l'intérieur de l'enceinte de travail (3) et accouplée mécaniquement à un arbre d'entraînement (M) du moteur électrique,
- un moyen de filtration (8) monté coaxialement à la vis de pressage (7) à l'intérieur de l'enceinte de travail (3), prévu pour séparer le jus des résidus de pressage, et
- un organe de découpe (9) des aliments disposé entre l'ouverture d'admission (4) et la vis de pressage (7),
**caractérisé en ce que** l'ouverture d'admission (4) est formée dans un conduit de largeur supérieure au plus grand rayon de la vis de pressage (7) et **en ce que** l'organe de découpe (9) des aliments comporte au moins un bord de coupe (9a) délimitant un passage d'aliment découpé (P2) présentant au moins une dimension inférieure au plus grand rayon de la vis de pressage (7) pour sectionner un aliment introduit entier par l'ouverture d'admission (4) en plusieurs morceaux.

2. Appareil électroménager selon la revendication 1, **caractérisé en ce que** l'enceinte de travail (3) comporte un couvercle (10) dans lequel est formée l'ouverture d'admission (4).

3. Appareil électroménager selon l'une des revendications 1 ou 2, **caractérisé en ce que** l'ouverture d'admission (4) est formée par une goulotte (41) issue du couvercle (10).

4. Appareil électroménager selon l'une des revendications 1 à 3, **caractérisé en ce que** l'organe de découpe (9) est monté à l'intérieur de l'enceinte de travail (3) et est accouplé en rotation à l'arbre d'entraînement (M) du moteur électrique et/ou à la vis de pressage (7).

5. Appareil électroménager selon l'une des revendications 1 à 4, **caractérisé en ce qu'**il comporte un bord de coupe (9a) concave balayant en rotation l'espace de l'enceinte de travail (3) disposé sous une partie inférieure de l'ouverture d'admission (4).

6. Appareil électroménager selon l'une des revendications 1 à 5, **caractérisé en ce qu'**un organe de blocage en rotation (11) des aliments est disposé entre l'ouverture d'admission (4) et la vis de pressage (7).

7. Appareil électroménager selon l'une des revendications 1 à 6, **caractérisé en ce que** l'organe de découpe (9) comporte une lame hélicoïdale (91) ou une lame concave (97).

8. Appareil électroménager selon la revendication 7, **caractérisé en ce que** la lame hélicoïdale (91) ou la lame concave (97) est solidaire de la vis de pressage (7) et est de préférence formée dans le prolongement d'un filet (71) de ladite vis de pressage (7).

9. Appareil électroménager selon l'une des revendications 1 à 8, **caractérisé en ce qu'**il comporte un moyen de guidage des aliments introduits par ladite ouverture d'admission (4) vers l'organe de découpe (9) et la vis de pressage (7).

10. Appareil électroménager selon la revendication 9, **caractérisé en ce que** le moyen de guidage comporte une couronne (12) présentant une surface interne guidante (13) sensiblement conique et qui délimite un passage pour les aliments vers l'organe de découpe (9) et la vis de pressage (7).

11. Appareil électroménager selon la revendication 10, **caractérisé en ce que** la couronne (12) comporte des moyens d'appui (14) sur au moins une paroi latérale de l'enceinte de travail (3).

12. Appareil électroménager selon l'une des revendications 10 ou 11, **caractérisé en ce que** la couronne (12) est solidaire de la vis de pressage (7).

13. Appareil électroménager selon l'une des revendications 7 ou 8 et l'une des revendications 10 à 12, **caractérisé en ce que** la lame hélicoïdale (91) est agencée à l'intérieur de la surface interne guidante (13) de la couronne (12).

14. Appareil électroménager selon l'une des revendications 1 à 3, **caractérisé en ce que** l'organe de découpe (9) s'étend au travers de l'ouverture d'admission (4) de manière à sectionner les aliments en morceaux présentant une largeur inférieure au rayon de la vis de pressage (7) et est fixé sur au moins un rebord ou une paroi de ladite ouverture d'admission (4).

15. Appareil électroménager selon les revendications 3 et 14, **caractérisé en ce que** l'organe de découpe (9) est agencé à l'intérieur de la goulotte (41).

16. Appareil électroménager selon l'une des revendications 14 ou 15, **caractérisé en ce que** l'organe de découpe (9) comporte au moins une lame (92) et/ou une saillie coupante.

17. Appareil électroménager selon l'une des revendications 1 à 16, **caractérisé en ce qu'**il comporte un poussoir (15) comportant un corps de poussée (16) prévu pour pousser les aliments à presser dans l'ouverture d'admission (4) contre l'organe de découpe (9) et en direction de la vis de pressage (7).

18. Appareil électroménager selon les revendications 15 et 17, **caractérisé en ce que** le corps de poussée (16) dudit poussoir (15) est adapté pour être inséré dans la goulotte (41) formant ladite ouverture d'admission (4) et présente une longueur au moins égale à la hauteur de ladite goulotte (41).

19. Appareil électroménager selon l'une des revendications 14 à 16 et l'une des revendications 17 ou 18, **caractérisé en ce que** le corps de poussée (16) du poussoir (15) comporte au moins une rainure longitudinale adaptée pour permettre un enfilement du corps de poussée (16) sur l'organe de découpe (9) lors de l'insertion du poussoir (15) dans ladite goulotte (41).

## Claims

1. A household appliance (1) for preparing juice by juicing foods, in particular the tissues of plants such as fruits or vegetables, the appliance comprising :
a housing (2) containing an electric drive motor;
a working chamber (3) that is adapted to be installed on the housing and that includes an inlet opening (4) for inverting food into the working chamber (3), a first discharge outlet (5) for discharging the juice, and a second discharge outlet (6) for discharging the juicing residues;
a juicer screw (7) that is mounted inside the working chamber (3) and that is coupled mechanically to a drive shaft (M) of the electric motor;
filter means (8) that are mounted coaxially about the juicer screw (7) inside the worming chamber (3), and that are provided to separate the juice from the juicing residues; and
a cutter member (9) for cutting up the food, the cutter member being arranged between the inlet opening (4) and the juicer screw (7);
the appliance being **characterized in that** the inlet opening (4) is formed in a duct of width that is greater than the greatest radius of the juicer screw (7), and **in that** the cutter member (9) for cutting the food includes at least one cutting edge (9a) that defines a cut-food passage (P2) that presents at least one dimension that is less than the greatest radius of the juicer screw (7), so as to cut up food that has been inserted whole via the inlet opening (4) into several pierces.

2. A household appliance according to claim 1, **characterized in that** the working chamber (3) includes a cover (10) in which there is formed an inlet opening (4).

3. A household appliance according to claim 1 or claim 2, **characterized in that** the inlet opening (4) is formed by a funnel (41) coming from the cover (10).

4. A household appliance according to any one of claims 1 to 3, **characterized in that** the cutter member (9) is mounted inside the working chamber (3) and is rotatably coupled to the drive shaft (M) of the electric motor and/or to the juicer screw (7).

5. A household appliance according to any one of claims 1 to 4, **characterized in that** it includes a cutting edge (9a) that is concave and, when rotating, sweeps the space of the working chamber (3) that is arranged below a bottom portion of the inlet opening (4).

6. A household appliance according to any one of claims 1 to 5, **characterized in that** a blocking member (11) for blocking the food against rotation is arranged between the inlet opening (4) and the juicer screw (7).

7. A household appliance according to any one of claims 1 to 6, **characterized in that** the cutter member (9) comprises a helical blade (91) or a concave blade (97).

8. A household appliance according to claim 7, **characterized in that** the helical blade (91) or the concave blade (97) is secured to the juicer screw (7), and is preferably formed to extend a thread (71) of said juicer screw (7).

9. A household appliance according to any one of claims 1 to 8, **characterized in that** it includes guide means for guiding food that has been inserted via said inlet opening (4) towards the cutter member (9) and the juicer screw (7).

10. A household appliance according to claim 9, **characterized in that** the guide means include a ring (12) that presents an inner guide surface (13) that is substantially conical, and that defines a passage for the food towards the cutter member (9) and the juicer screw (7).

11. A household appliance according to claim 10, **characterized in that** the ring (12) includes bearer means (14) for bearing against at least one side wall of the working chamber (3).

12. A household appliance according to claim 10 or claim 11, **characterized in that** the ring (12) is secured to the juicer screw (7).

13. A household appliance according to claim 7 or claim 8, and to any one of claims 10 to 12, **characterized in that** the helical blade (91) is arranged inside the inner guide surface (13) of the ring (12).

14. A household appliance according to any one of claims 1 to 3, **characterized in that** the cutter member (9) extends through the inlet opening (4) in such a manner as to cut the food up into pieces, the cutter member presenting a width that is less than the radius of the juicer screw (7), and being fastened on at least one rim or one wall of said inlet opening (4).

15. A household appliance according to claim 3 and claim 14, **characterized in that** the cutter member (9) is arranged inside the funnel (41).

16. A household appliance according to claim 14 or claim 15, **characterized in that** the cutter member (9) comprises at least one blade (92) and/or a sharp projection.

17. A household appliance according to any one of claims 1 to 16, **characterized in that** it includes a pusher (15) comprising a thrust body (16) for pushing the food to be juiced into the inlet opening (4), against the cutter member (9), and towards the juicer screw (7).

18. A household appliance according to claim 15 and claim 17, **characterized in that** the thrust body (16) of said pusher (15) is adapted to be inverted in a funnel (41) forming said inlet opening (4), and presents a length that is at least equal to the height of said funnel (41).

19. A household appliance according to any one of claims 14 to 16, and to claim 17 or claim 18, **characterized in that** the thrust body (16) of the pusher (15) includes at least one longitudinal groove that is adapted to enable the thrust body (16) to thread over the cutter member (9) while the pusher (15) is being inserted intro said funnel (41).

## Patentansprüche

1. Elektrisches Haushaltsgerät (1) zur Zubereitung von Saft durch Auspressen von Nahrungsmitteln, insbesondere von pflanzlichen, wie Obst oder Gemüse, umfassend:
- ein Gehäuse (2), das einen elektrischen Antriebsmotor enthält,
- einen Arbeitsbehälter (3), der dafür ausgelegt ist, auf dem Gehäuse angebracht zu werden, und der eine Öffnung zum Zuführen (4) von Nahrungsmitteln in den Arbeitsbehälter (3), einen ersten Ablaßausgang (5) für den Saft und einen zweiten Ablaßausgang (6) für die Preßrückstände umfaßt,
- eine Preßschnecke (7), die in dem Arbeitsbehälter (3) angebracht ist und mit einer Antriebswelle (M) des Elektromotors mechanisch gekoppelt ist,
- ein in dem Arbeitsbehälter (3) koaxial zu der Preßschnecke (7) angebrachtes Filtermittel (8), das vorgesehen ist, um den Saft von den Preßrückständen zu trennen, sowie
- ein Organ zum Schneiden (9) der Nahrungsmittel, das zwischen der Zuführöffnung (4) und der Preßschnecke (7) angeordnet ist,
**dadurch gekennzeichnet, daß** die Zuführöffnung (4) in einem Kanal mit einer Breite, die größer als der größte Radius der Preßschnecke (7) ist, ausgebildet ist und daß das Organ zum Schneiden (9) der Nahrungsmittel wenigstens eine Schneidkante (9a) aufweist, die einen Durchgang für geschnittenes Nahrungsmittel (P2), der wenigstens eine Abmessung aufweist, die kleiner als der größte Radius der Preßschnecke (7) ist, begrenzt, um ein über die Zuführöffnung (4) ganz eingeführtes Nahrungsmittel in mehrere Stücke zu zerteilen.

2. Elektrisches Haushaltsgerät nach Anspruch 1, **dadurch gekennzeichnet, daß** der Arbeitsbehälter (3) einen Deckel (10) umfaßt, in dem die Zuführöffnung (4) ausgebildet ist.

3. Elektrisches Haushaltsgerät nach einem der Ansprüche 1 oder 2, **dadurch gekennzeichnet, daß** die Zuführöffnung (4) durch einen von dem Deckel (10) ausgehenden Stutzen (41) gebildet ist.

4. Elektrisches Haushaltsgerät nach einem der Ansprüche 1 bis 3, **dadurch gekennzeichnet, daß** das Schneidorgan (9) innerhalb des Arbeitsbehälters (3) angebracht ist und mit der Antriebswelle (M) des Elektromotors und/oder mit der Preßschnecke (7) drehgekoppelt ist.

5. Elektrisches Haushaltsgerät nach einem der Ansprüche 1 bis 4, **dadurch gekennzeichnet, daß** es eine konkave Schneidkante (9a) umfaßt, die den unter einem unteren Teil der Zuführöffnung (4) angeordneten Raum des Arbeitsbehälters (3) drehend abfährt.

6. Elektrisches Haushaltsgerät nach einem der Ansprüche 1 bis 5, **dadurch gekennzeichnet, daß** ein Organ zur Drehblockierung (11) der Nahrungsmittel zwischen der Zuführöffnung (4) und der Preßschnecke (7) angeordnet ist.

7. Elektrisches Haushaltsgerät nach einem der Ansprüche 1 bis 6, **dadurch gekennzeichnet, daß** das Schneidorgan (9) eine spiralförmige Klinge (91) oder eine konkave Klinge (97) umfaßt.

8. Elektrisches Haushaltsgerät nach Anspruch 7, **dadurch gekennzeichnet, daß** die spiralförmige Klinge (91) oder die konkave Klinge (97) mit der Preßschnecke (7) fest verbunden ist und vorzugsweise in der Verlängerung eines Gewindes (71) der Preßschnecke (7) ausgebildet ist.

9. Elektrisches Haushaltsgerät nach einem der Ansprüche 1 bis 8, **dadurch gekennzeichnet, daß** es ein Mittel zum Führen der über die Zuführöffnung (4) eingeführten Nahrungsmittel zu dem Schneidorgan (9) und der Preßschnecke (7) umfaßt.

10. Elektrisches Haushaltsgerät nach Anspruch 9, **dadurch gekennzeichnet, daß** das Führungsmittel einen Kranz (12) umfaßt, der eine im wesentlichen konische, führende Innenfläche (13) aufweist, die einen Durchgang für die Nahrungsmittel in Richtung des Schneidorgans (9) und der Preßschnecke (7) begrenzt.

11. Elektrisches Haushaltsgerät nach Anspruch 10, **dadurch gekennzeichnet, daß** der Kranz (12) Mittel zur Anlage (14) an wenigstens einer Seitenwand des Arbeitsbehälters (3) umfaßt.

12. Elektrisches Haushaltsgerät nach einem der Ansprüche 10 oder 11, **dadurch gekennzeichnet, daß** der Kranz (12) mit der Preßschnecke (7) fest verbunden ist.

13. Elektrisches Haushaltsgerät nach einem der Ansprüche 7 oder 8 und einem der Ansprüche 10 bis 12, **dadurch gekennzeichnet, daß** die spiralförmige Klinge (91) innerhalb der führenden Innenfläche (13) des Kranzes (12) angeordnet ist.

14. Elektrisches Haushaltsgerät nach einem der Ansprüche 1 bis 3, **dadurch gekennzeichnet, daß** das Schneidorgan (9) durch die Zuführöffnung (4) verläuft, so daß die Nahrungsmittel in Stücke mit einer Breite, die kleiner als der Radius der Preßschnecke (7) ist, geschnitten werden, und an wenigstens einem Rand oder einer Wand der Zuführöffnung (4) befestigt ist.

15. Elektrisches Haushaltsgerät nach den Ansprüchen 3 und 14, **dadurch gekennzeichnet, daß** das Schneidorgan (9) innerhalb des Stutzens (41) angeordnet ist.

16. Elektrisches Haushaltsgerät nach einem der Ansprüche 14 oder 15, **dadurch gekennzeichnet, daß** das Schneidorgan (9) wenigstens eine Klinge (92) und/oder einen Schneidvorsprung umfaßt.

17. Elektrisches Haushaltsgerät nach einem der Ansprüche 1 bis 16, **dadurch gekennzeichnet, daß** es einen Stopfer (16) umfaßt, welcher einen Schubkörper (16) aufweist, der vorgesehen ist, um die auszupressenden Nahrungsmittel in der Zuführöffnung (4) gegen das Schneidorgan (9) sowie in Richtung der Preßschnecke (7) zu drücken.

18. Elektrisches Haushaltsgerät nach den Ansprüchen 15 und 17, **dadurch gekennzeichnet, daß** der Schubkörper (16) des Stopfers (15) dafür ausgelegt ist, in den die Zuführöffnung (4) bildenden Stutzen (41) eingeführt zu werden, und eine Länge aufweist, die wenigstens gleich der Höhe des Stutzens (41) ist.

19. Elektrisches Haushaltsgerät nach einem der Ansprüche 14 bis 16 und einem der Ansprüche 17 oder 18, **dadurch gekennzeichnet, daß** der Schubkörper (16) des Stopfers (15) wenigstens eine Längsnut aufweist, die dafür ausgelegt ist, ein Aufsetzen des Schubkörpers (16) auf das Schneidorgan (9) während des Einführens des Stopfers (15) in den Stutzen (41) zu ermöglichen.
